# EUROPEAN PATENT APPLICATION

(11) **EP 2 538 078 A2**
(43) Date of publication of application: **26.12.2012**
(21) Application number: 12172470.2
(22) Date of filing: 18.06.2012
(51) Int. Cl.: F03D 11/00

(54) **System and method for monitoring stress on a wind turbine blade**

(30) Priority: 24.06.2011 US 201113167885
(71) Applicant: General Electric Company, Schenectady, NY 12345 (US)
(72) Inventor: George, Sheri, Niskayuna, NY 12309 (US)
(74) Representative: Bedford, Grant Richard

(57) **Abstract**

A method for monitoring stress on a wind turbine blade 14 during loading is disclosed. The method includes capturing multiple images at respective locations of the blade 14. The method also includes measuring temperature at the respective locations based upon captured images. The method further includes calculating stress applied on the blade 14 at the respective locations based upon the measured temperature.

## Description

The invention relates generally to qualification of wind turbine blades, and more specifically, to techniques for stress/ damage monitoring of wind turbine blade during dynamic testing.

Static and dynamic loading are typically used for testing of in wind turbine blades. Static testing will help in estimating the stiffness and ultimate strength of blade. Dynamic tests help in evaluating the fatigue strength of the blades.. Typically during static testing, an impulse load is applied on the blade and blade's deflection over time is studied. During dynamic testing, a time varying load (usually sinusoidal) is applied on the blade and the blades deflections over the number of cycles is studied.

A commonly known stress measurement technique employs strain gauges mounted on components such as blades, to measure stress indirectly. Generally, the blades are instrumented with strain gauges to measure strains at various locations. For example, about 120 strain gauges are mounted on a 37 m blade and about 20% of those are mounted on inside of the blade. Typically such strain gauges may be about 2 to about 3 m apart. Strain gauges provide the strains or deflections at different regions on the blade. Such measurements are compared to design specification limits and an alarm is set in an event that the measurements exceed specification limits.

However, the bonding of the strain gauges to the blade via an epoxy measures strain on a surface of the blade at a fixed location. Such measurements are affected by factors such as, but not limited to, rigidity of adhesion and orientation of strain gauges. Additionally, the strain gauge measurements may be affected by temperature variations. Furthermore, presence of wrinkles, delaminations or other defects on the blades may cause a change in the actual strain.

Accordingly, an improved stress measurement technique is needed to address the one or more aforementioned issues.

In accordance with an embodiment of the invention, a method for monitoring stress on a wind turbine blade during loading is provided. The method includes capturing multiple images at respective locations of the blade. The method also includes measuring temperature at the respective locations based upon captured images. The method further includes calculating stress applied on the blade at the respective locations based upon the measured temperature.

In accordance with another embodiment of the invention, a system for monitoring stress on a wind turbine blade during loading is provided. The system includes a camera configured to capture multiple images at respective locations of the blade. The system also includes a processor configured to receive a plurality of temperature measurements from the camera and calculate stress based upon the measurements.

Various features, aspects, and advantages of the present invention will become better understood when the following detailed description is read with reference to the accompanying drawings in which like characters represent like parts throughout the drawings, wherein:
FIG. 1 is a schematic representation of a system for monitoring stresses on a typical wind turbine blade in accordance with an embodiment of the invention.
FIG. 2 is an exemplary scan configuration employed by the IR camera in FIG. 1.
FIG. 3 is a schematic illustration of a view in the direction of the camera in FIG. 1.
FIG. 4 is a side view of the blade, as captured by the camera in FIG. 1.
FIG. 5 is a front view of the blade, as captured by the camera in FIG. 1.
FIG. 6 is a flow chart representing steps in a method for monitoring stresses in a wind turbine blade in accordance with an embodiment of the invention.

As discussed in detail below, embodiments of the invention include a system and method for qualifying a wind turbine blade. The thermoelastic technique monitors stresses during fatigue testing of the blade/s. As used herein, the term 'fatigue testing' refers to cyclic application of load on the blade/s, for example, alternate cycles of compression and tension in opposite directions. Such a technique enables monitoring of stresses temporally and spatially on the blades. Furthermore, it enables identification of damaged locations on the blade/s and monitor propagation of damages during cyclic loading. Consequently, this technique enables estimation of strength of a material employed on the blade/s and lifetime of the blade/s. The objective of such technique is to estimate lifetime of the blade and the fatigue strength of the blade. It should be noted that although discussion below refers to wind turbine blades, the technique may be employed in various applications such as, but not limited to, propeller blades of helicopters and ships.

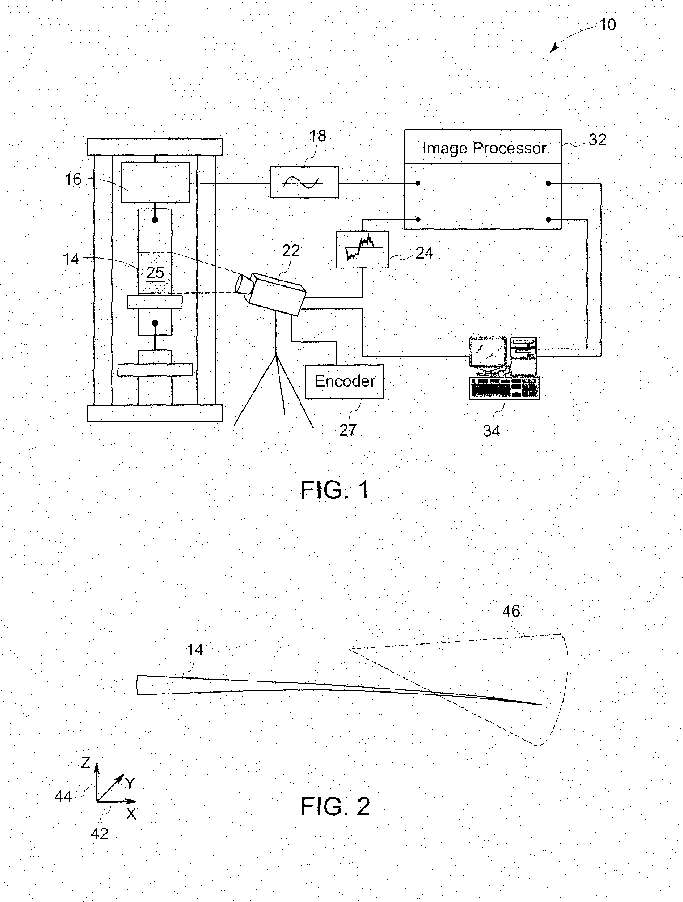

FIG. 1 is a schematic representation of a system 10 for monitoring stresses on a typical wind turbine blade 14. The blade 14 is actuated by a loading machine or actuator 16 during a cyclic loading process. A lock-in signal 18 is tapped from the loading machine 16. The signal 18 includes information about amount of load being applied in terms of amplitude and frequency of the load. An infrared (IR) camera 22 is employed to continuously capture images 24 of the blade 14. The IR camera 22 measures temperature emitted through a surface 25 of the blade 14. In a particular embodiment, the camera 22 may measure a temperature change of about 20 mK. The IR camera 22 is positioned at different locations focusing on different sections of the blade 14. The IR camera 22 is also coupled/mounted on an encoder 27 that directs scanning mechanism of the camera 22. This determines the translational and rotational position of the camera 22, and also, field of view of the blade 14 covered by the camera 22.

In operation, the lockin signal 18 synchronizes with the cyclic load applied and initiates acquiring data at a point of maxima in the load applied. Such acquisition triggers the camera 22 to start capturing images of the blade 14. In a particular embodiment, the camera 22 may be disposed on a gantry (not shown) and rotates around different sections of the blade 14. Further, the camera actuates below the blade 14 and scans the surface. In one embodiment, the camera 22 may be located at a position where field of view is more than at least about 1 m. The lock-in processor 32 coupled to the camera 22 estimates accurate temperature emission and furthermore, stress on the blades and identifies damaged locations on the blade 14. The blade 14 may include markers that enable easier alignment of the blade for the different frames captured by the camera 22. In another embodiment, a laser (not shown) may be mounted on the camera 22 that produces a spot that may be used to align blades for frame registration or motion compensation.

The processor 32 also eliminates ambient temperature effects on the temperature measurements and also, eliminates variations in measurement due to noise. Furthermore, a motion compensation algorithm is employed by the processor 32 to nullify variations in the position of the blade 14 during cyclic loading process. Stresses on the blade 14 that are measured are mapped on a CAD model using techniques such as, but not limited to, bilinear transforms, affine registration or perspective registration. Mapping is performed for pressure and suction sides of the blade 14. The mapped stress model may further be compared with FEA model for detection of variation in stresses from the predicted. Thus, high stress/damaged locations may be determined. The time intervals between detection of high stresses and damage initiation are noted. The growth of the damages during loading process is monitored and the rate of the damages are estimated. Furthermore, mapped stress data on CAD model are subjected to a finite element model (FEM) to predict lifetime of the blade 14. An operator is alerted in an event that the stresses measured are beyond predetermined limits. The results of such analysis may also be employed to further enhance design of the blade/s.

It should be noted that embodiments of the invention are not limited to any particular processor for performing the processing tasks of the invention. The term "processor" as that term is used herein, is intended to denote any machine 34 capable of performing the calculations, or computations, necessary to perform the tasks of the invention. The term "processor" is intended to denote any machine that is capable of accepting a structured input and of processing the input in accordance with prescribed rules to produce an output.

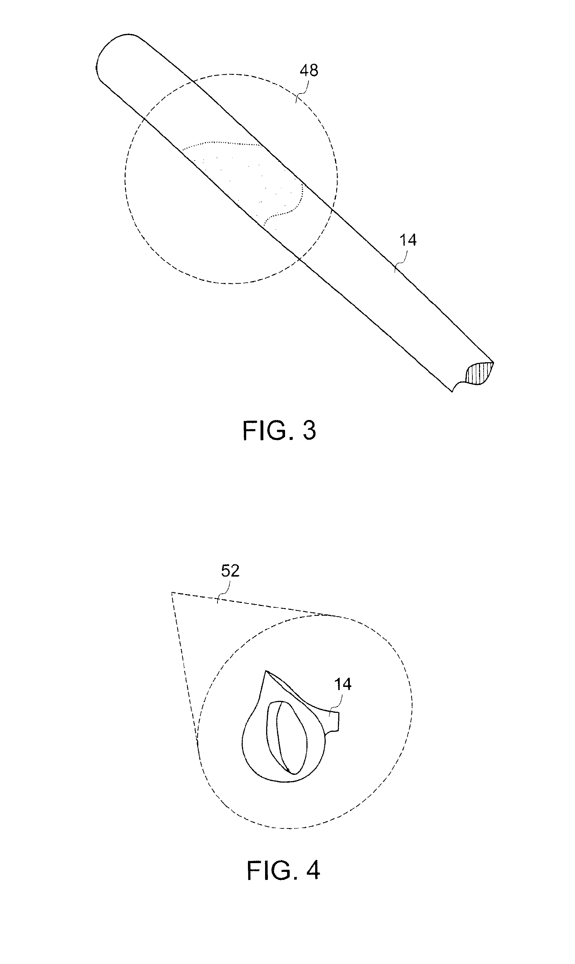

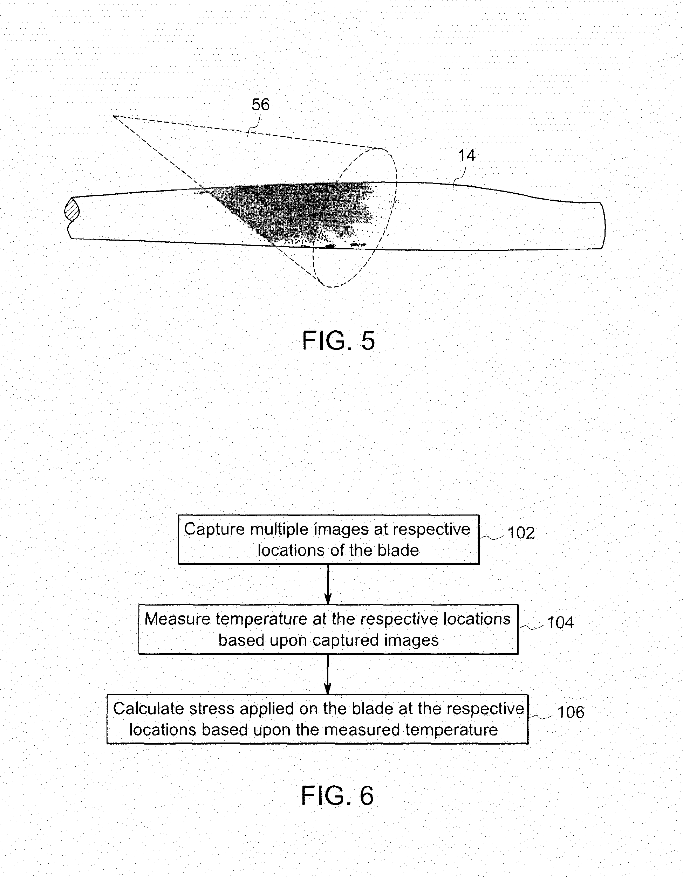

FIGs. 2-5 are exemplary scan configurations employed by the IR camera 22 in FIG. 1. In the exemplary embodiment in FIG. 2, the camera 22 is positioned at about 5 m from blade 14 in X-direction referred by reference numeral 42 and 5 m in the Y-direction 44 and has a field of view as depicted by region 46. Similarly, FIG. 3 illustrates a view in the direction of the camera 22 with a field of view 48 of the blade 14, while FIGs. 4 and 5 illustrate a side view and a front view respectively with fields of view 52 and 56 respectively.

FIG. 6 is a flow chart representing steps in a method for monitoring stresses on a blade. The method includes capturing multiple images at respective locations of the blade in step 102. In one embodiment, a camera is scanned at multiple sections of the blade to capture the images. In another embodiment, images are captured after triggering of the camera via a lock-in signal. Furthermore, temperature is measured at the respective locations based upon the captured images in step 104. Stress being experienced by the blade is calculated at the respective locations based upon the measured temperature in step 106. In a particular embodiment, ambient temperature effects are eliminated prior to calculating the stress. In another embodiment, variations in temperature measurements due to noise are eliminated. In yet another embodiment, any shifts in position of the blade during loading process is eliminated via a motion compensation algorithm. In another embodiment, stress is mapped on a CAD model. In yet another embodiment, the stress is compared to a finite element analysis to predict lifetime of the blade.

The various embodiments of a system and method for qualifying a wind turbine blade described above thus provide a way to achieve a convenient and efficient means of measuring stress during the loading process. This technique also provides for noncontact, remote measurement and precise readings. The technique also eliminates usage of strain gauges that are currently employed thus resulting in a cost effective means of measurement. Furthermore, the technique allows for online monitoring of an entire surface (both sides) of the blade for stress measurements, thus enabling higher accuracy readings.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. Similarly, the various features described, as well as other known equivalents for each feature, can be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A method for monitoring stress on a wind turbine blade during loading, the method comprising:
   capturing a plurality of images at respective locations of the blade;
   measuring temperature at the respective locations based upon captured images;
      and
   calculating stress applied on the blade at the respective locations based upon the measured temperature.
2. The method of clause 1, wherein said calculating stress comprises eliminating ambient temperature effects.
3. The method of any preceding clause, wherein said calculating stress comprises eliminating variations due to noise.
4. The method of any preceding clause, wherein said calculating comprises eliminating shift in position of the blade during a loading process.
5. The method of any preceding clause, wherein said capturing the plurality of images comprises scanning a camera at different sections of the blade.
6. The method of any preceding clause, further comprising triggering the capturing of images via a lock-in signal.
7. The method of any preceding clause, further said calculating comprises estimating growth of damages on the blade.
8. A system for monitoring stress on a wind turbine blade during loading, the system comprising:
   a camera configured to capture a plurality of images at respective locations of the blade; and
   a processor configured to receive a plurality of temperature measurements from the camera and calculate stress based upon the measurements.
9. The system of any preceding clause, further comprising an actuator coupled to the blade to apply a load on the blade.
10. The system of any preceding clause, wherein said camera captures the plurality of images based upon a triggering via a lock-in signal.
11. The system of any preceding clause, wherein said camera comprises an infrared camera.
12. The system of any preceding clause, wherein said camera is positioned at a field of view distance of at least 1 m from a surface of the blade.
13. The system of any preceding clause, wherein said processor comprises a motion compensation algorithm to eliminate variations in position of the blade encountered during loading.
14. The system of any preceding clause, wherein said processor comprises an algorithm to eliminate ambient temperature effects.
15. The system of any preceding clause, wherein said processor comprises an algorithm to eliminate variations in the measurements due to noise.
16. The system of any preceding clause, comprising an encoder coupled to the camera to direct scan mechanism of the camera on different portions of the blade.

## Claims

1. A method for monitoring stress on a wind turbine blade (14) during loading, the method comprising:
capturing (102) a plurality of images at respective locations of the blade (14);
measuring temperature (104) at the respective locations based upon captured images; and
calculating stress (106) applied on the blade (14) at the respective locations based upon the measured temperature.

2. The method of claim 1, wherein said calculating stress (106) comprises eliminating ambient temperature effects.

3. The method of any preceding claim, wherein said calculating stress (106) comprises eliminating variations due to noise.

4. The method of any preceding claim, wherein said calculating (106) comprises eliminating shift in position of the blade during a loading process.

5. The method of any preceding claim, wherein said capturing (102) the plurality of images comprises scanning a camera at different sections of the blade.

6. The method of any preceding claim, further comprising triggering the capturing of images via a lock-in signal.

7. The method of any preceding claim, wherein said calculating (106) further comprises estimating growth of damages on the blade (14).

8. A system (10) for monitoring stress on a wind turbine blade (14) during loading, the system comprising:
a camera (22) configured to capture a plurality of images at respective locations of the blade (14); and
a processor (32) configured to receive a plurality of temperature measurements from the camera and calculate stress based upon the measurements.

9. The system (10) of claim 8, further comprising an actuator coupled to the blade (14) to apply a load on the blade.

10. The system (10) of claim 8 or claim 9, wherein said camera (22) captures the plurality of images based upon a triggering via a lock-in signal.

11. The system (10) of any of claims 8 to 10, wherein said camera (22) comprises an infrared camera.

12. The system (10) of any of claims 8 to 11, wherein said processor (32) comprises a motion compensation algorithm to eliminate variations in position of the blade (14) encountered during loading.

13. The system (10) of any of claims 8 to 12, wherein said processor (32) comprises an algorithm to eliminate ambient temperature effects.

14. The system (10) of any of claims 8 to 13, wherein said processor (32) comprises an algorithm to eliminate variations in the measurements due to noise.

15. The system (10) of any of claims 8 to 14, comprising an encoder (27) coupled to the camera (22) to direct a scan mechanism of the camera (22) on different portions of the blade (14).
